(19) Europäisches Patentamt
European Patent Office
Office européen des brevets

(11) **EP 3 959 980 A1**

(12) **EUROPÄISCHE PATENTANMELDUNG**

(43) Veröffentlichungstag:
**02.03.2022 Patentblatt 2022/09**

(21) Anmeldenummer: **21189058.7**

(22) Anmeldetag: **02.08.2021**

(51) Internationale Patentklassifikation (IPC):
**A01N 33/08** (2006.01)  **A47K 3/00** (2006.01)
**A47K 4/00** (2006.01)  **A47L 17/02** (2006.01)
**C08F 265/06** (2006.01)  **C08K 3/34** (2006.01)
**B29B 15/08** (2006.01)  **B29C 39/00** (2006.01)

(52) Gemeinsame Patentklassifikation (CPC):
(C-Sets verfügbar)
**A01N 33/08; A47K 3/00; A47K 4/00; A47L 17/02;
B29C 39/006; C04B 26/06; C08F 265/06;**
C04B 2103/0062  (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **25.08.2020  DE 102020122216**

(71) Anmelder: **Schock GmbH
94209 Regen (DE)**

(72) Erfinder:
• **Datsyuk, Dr. Vitaliy
94227 Zwiesel (DE)**
• **Orendorz, Dr. Adam
94227 Zwiesel (DE)**
• **Achatz, Oskar
94253 Bischofsmais (DE)**

(74) Vertreter: **Lindner Blaumeier
Patent- und Rechtsanwälte
Partnerschaftsgesellschaft mbB
Dr. Kurt-Schumacher-Str. 23
90402 Nürnberg (DE)**

(54) **WÄRMEAUSHÄRTBARE GIESSMASSE, DARAUS HERGESTELLTER FORMKÖRPER, UND VERFAHREN ZUR HERSTELLUNG DES FORMKÖRPERS**

(57) Wärmeaushärtbare Gießmasse, mit einem polymeren Bindemittel und darin eingebrachten Füllstoffpartikeln, wobei die Gießmasse wenigstens ein ätherisches Öl enthält.

Fig. 1

EP 3 959 980 A1

(52) Gemeinsame Patentklassifikation (CPC): (Forts.)

C-Sets
**C04B 26/06, C04B 14/06, C04B 14/30,
C04B 14/303, C04B 14/305, C04B 14/306,
C04B 14/307, C04B 14/308, C04B 18/20,
C04B 20/0076, C04B 24/00, C04B 24/008,
C04B 24/02, C04B 24/04, C04B 24/045,
C04B 40/0082, C04B 40/0263;
C08F 265/06, C08F 220/14, C08F 222/103**

**Beschreibung**

Die Erfindung bezieht sich auf eine wärmeaushärtbare Gießmasse.

Die menschliche Gesundheit wird sicherlich durch mikrobielle Objekte zu Hause, in der Schule, am Arbeitsplatz und in der Umwelt im Allgemeinen beeinträchtigt. Viren und Bakterien verursachen eine Vielzahl von Krankheiten, die zu hohen Fehlzeiten in Schulen und am Arbeitsplatz führen. Die Entstehung neuer Viren, z.B. SARS-CoV-2, führt zu schwerwiegenden Erkrankungen bis hin zum Tod. Die Öffentlichkeit konzentriert sich immer mehr auf die Desinfektion von Personen und Eigentum. Antimikrobielle Sauberkeit wird in vielen Lebensbereichen und an vielen Orten immer wichtiger.

Antimikrobielle Mittel, die in die festen Oberflächenmaterialien aus entweder einem Acryl-, einem ungesättigten Polyester- oder einem Epoxidharz eingearbeitet sind, sind in WO 97/49761 (E. I. Du Pont de Nemours and Company) beschrieben. Beschrieben wird die Verwendung anorganischer Partikel, wie z.B. Zinkoxid-Kernpartikel, die zwei Oberflächenbeschichtungen des Metalls oder der Metallverbindungen aufweisen. Die Verwendung solcher antimikrobiellen Mittel kann jedoch teuer sein, was zu hohen Produktionskosten für das Endmaterial führt.

Chitosan in Kombination mit einer Lösung aus Zinksulfat, Kupfersulfat oder Silbernitrat kann die antimikrobielle Aktivität von Materialien, wie in US 7 381 715 B2 (E.I. Du Pont de Nemours and Company) beschrieben, verstärken. Metallionen, wie Ag+, Cu2+, Zn2+ u.a., zeigen im Vergleich zu bakteriostatischen Polymeren aufgrund einer anderen Wirkungsweise antimikrobiellen Eigenschaften. Chitosan ist ein Chelatbildner und neigt zur leichten Bildung von Komplexen mit Übergangsmetallen und Schwermetallen. Es wurde gezeigt (siehe Wang X., Du Y., Liu H (2004) Carbohydr. Polym 56:21), dass der Chitosan-Zn-Komplex ein breites Spektrum an antimikrobieller Aktivität besitzt, die durch das Chelatverhältnis beeinflusst wird. Der Einfluss der Eigenschaft von Metallionen, der molekularen Struktureigenschaften von Chitosan und von Umweltfaktoren auf die antimikrobielle Aktivität von Chitosan-Metall-Komplexen ist allerdings nicht vollständig geklärt.

Zunehmend werden Küchen- oder Sanitärgegenstände wie Küchenspülen, Duschwannen o.dgl. aus einem Kompositmaterial, das aus einer ausgehärteten Gießmasse umfassend eine Polymermatrix mit eingebetteten Füllstoffpartikeln besteht, hergestellt. Gerade im Küchen- oder Badbereich kann sich eine Bakterien- oder Virenbelastung ergeben, da dort z.B. mit Lebensmitteln gearbeitet wird, es oft feucht ist oder sich mehrere Menschen aufhalten, weshalb dort auf besondere Hygienemaßnahmen Wert gelegt wird. Wenngleich durch häufige Reinigung bzw. Desinfektion ein hoher Reinheitsgrad erreicht werden kann, gelingt es nicht immer, die Gegenstände wie die Küchenspüle oder die Duschtasse oder Badewanne an jeder Stelle entsprechend zu reinigen.

Der Erfindung liegt damit das Problem zu Grunde, eine Gießmasse anzugeben, die die Herstellung von hinsichtlich der Sauberhaltung verbesserten Komposit-Formteilen ermöglicht.

Zur Lösung des Problems sieht die Erfindung eine wärmeaushärtbare Gießmasse, mit einem polymeren Bindemittel und darin eingebrachten Füllstoffpartikeln, vor, die sich dadurch auszeichnet, dass die Gießmasse wenigstens ein ätherisches Öl enthält.

Die erfindungsgemäße Gießmasse enthält mindestens ein ätherisches Öl, das der Gießmasse und auch dem daraus hergestellten Formgegenstand eine zumindest antibakterielle, insbesondere aber auch eine antimikrobielle Eigenschaft verleiht, die dazu führt, dass sich daran befindliche Bakterien oder Viren nicht vermehren können und absterben.

Ätherische Öle können eine alternative Strategie für die Übertragung einer antimikrobiellen Aktivität auf verschiedene Objekte darstellen. So besitzt z.B. Zitronengrasöl (Cymbopogen citratus) pharmakologische Eigenschaften, darunter antiparasitäre, antioxidative, antimikrobielle und entzündungshemmende Eigenschaften (siehe hierzu Li M., Liu B., Bernigaud Ch., et al., (2020) Plos Neglected Tropical Diseases, 6:1). Eine andere Studie (Tavares T.D., Antunes J.C., Padräo J., et al., (2020) Antibiotics 9:314) zeigte eine ausgezeichnete antimikrobielle Wirkung des Teebaumöls (TTO), des Zimtbaumöls (CLO) und des Niaouliöls (NO) auf die vier verbreiteten Bakterien *Staphylococcus aureus, Staphylococcus epidermidis, Escherichia coli* und *Pseudomonas aeruginosa,* die bei niedrigeren Konzentrationen als bei Silbernanopartikeln erzielt wurde. In EP 2 575 452 A1 wird eine antimikrobielle Zusammensetzung auf der Basis der ätherischen Öle beschrieben, die die antimikrobielle Aktivität eines festen, flüssigen oder umgebenden Luftraums reduzieren kann, wenn sie äußerlich angewendet wird.

Es hat sich nun überraschenderweise herausgestellt, dass ätherische Öle in eine solche Gießmasse eingebacht werden können und der Gießmasse eine entsprechende antibakterielle (gegen Bakterien) bzw. antimikrobielle (zusätzlich gegen Viren und Pilze) Eigenschaft verleihen. Sie können also in das polymere Bindemittel zusammen mit den Füllstoffpartikeln und gegebenenfalls weiteren Zuschlagmitteln wie einem Vernetzer o.dgl. eingemischt werden und sich homogen darin verteilen. Überraschenderweise kann diese Gießmasse auch entsprechend zur Herstellung von Formkörpern wie einer Küchenspüle oder einer Duschwanne oder - tasse verarbeitet werden, was durch einen thermischen Formgebungsprozess erfolgt, in dem die Gießmasse in eine Form gebracht wird und auf eine erhöhte Temperatur zur Polymerisation der Bindemittelmatrix erwärmt, dort für eine bestimmte Zeit gehalten und danach abgekühlt wird. Es stellte sich überraschenderweise heraus, dass das ätherische Öl während des Temperaturgangs weder abdampft noch seine antibakteriellen bzw. antimikrobiellen Eigenschaften ändert oder verliert. Es verteilt sich homogen im Formkörper, der damit zwangsläufig selbst eine entsprechende antibakterielle bzw. antimikrobielle Eigenschaft aufweist.

Diese Eigenschaft des Formkörpers führt nun dazu, dass der Formkörper quasi eine Art "Selbstreinigungseigenschaft" aufweist, da er antibakteriell oder antimikrobiell ausgerüstet ist und sich demzufolge auf seiner Oberfläche Keime und/oder Bakterien und/oder Viren nicht vermehren können bzw. darüber hinaus abgetötet werden. Da diese Eigenschaft eine Eigenschaft des Formkörpermaterials selbst ist, ist sie folglich an der gesamten Oberfläche gegeben, so dass auch eine Reinigung bzw. Abtötung dort erfolgt, wo kein zusätzliches Reinigungsmittel hinkommt. Damit kann die Hygiene im Küchen- oder Bad- bzw. allgemein Sanitärbereich deutlich verbessert werden.

Neben der Möglichkeit, dass die Gießmasse nur ein ätherisches Öl enthält, kann sie auch eine Mischung mehrerer ätherischer Öle enthalten. Dies ermöglicht es, durch eine entsprechende Mischung unterschiedliche Eigenschaften verschiedener ätherischer Öle quasi zu kombinieren bzw. die Gießmasse und letztendlich den gegossenen Formkörper mit einer breitbandigen antibakteriellen bzw. antimikrobiellen Eigenschaft auszurüsten.

Als mögliche ätherische Öle können verschiedene Öle eingesetzt werden. Das ätherische Öl oder die mehreren die Mischung bildenden ätherischen Öle sind bevorzugt, aber nicht abschließend, aus Zimtöl, Nelkenöl, Pimentöl, Thymianöl, Oreganoöl, Rosmarinöl, Citronellaöl, Geraniumöl, Zitronengrasöl, Eukalyptusöl oder Pfefferminzöl gewählt.

Der Gehalt bzw. der Anteil des ätherischen Öls bzw. der Ölmischung sollte im Bereich von 0,05 - 5 Gew.-% bezogen auf die Gießmasse liegen. Das heißt, dass bereits ein sehr geringer Ölanteil ausreichend ist, die Eigenschaften des Formkörpers deutlich zu verbessern. Vorzugsweise sollte der Öl- btw. Ölmischungsanteil 0,1 - 4 Gew.-% betragen, und insbesondere bevorzugt sollte der Anteil zwischen 0,3 - 3 Gew.-% liegt.

Küchenspülen und Sanitärartikel können in unterschiedlicher Weise bzw. unter Verwendung verschiedener Gießmassenzusammensetzung gefertigt werden. Verschiedene Möglichkeiten sind z.B. in DE 38 32 351 A1, DE 10 2004 055 365 A1 oder DE 10 2019 125 777.8 beschrieben.

Gießmassen dieser Art sind füllstoffhaltige polymerisierte Massen auf der Basis von Monomeren und anorganischen Füllstoffen. Die polymerisierbaren Massen gemäß DE 38 32 351 A1 bestehen z.B. aus 74 bis 76 Gew. % kristallinen Quarzsands, 24 bis 26 Gew. % einer Lösung von Polymethylmethacrylat in Methylmethacrylat, wobei der Anteil des Polymethylmethacrylats an dieser Lösung 18 bis 25 % beträgt, 1,2 Gew. % (bezogen auf das Harz) eines Peroxids, Hilfsmitteln und 2 Gew. % eines Vernetzers.

Die aus DE 10 2004 055 365 A1 bekannte Gießmasse unterscheidet sich von den früheren Gießmassen durch die Menge des Vernetzers, die extrem erhöht ist. Der Anteil des Vernetzers beträgt mindestens 10 Gew. % bezogen auf den Anteil des Monomers in der Bindemittellösung. Die Patentanmeldung DE 10 2019 1251777.8 beschreibt eine Küchenspüle aus Quarzkomposit und aus biobasierten Monomeren und Vernetzern, die den Kohlenstoff-Fußabdruck stark reduzieren.

Es können also grundsätzlich unterschiedliche Gießmassen zur Herstellung der Formteile verwendet werden. Es hat sich gezeigt, dass diese eine Basis für die erfindungsgemäße Gießmasse darstellen können.

So sollte z.B. in einem ersten Ansatz die erfindungsgemäße Gießmasse, neben dem Gehalt an ätherischem Öle oder Ölen, einen Anteil des polymeren Bindemittels bezogen auf die Masse der Gießmasse zwischen 15 - 60 Gew.%, insbesondere zwischen 20 - 40 Gew.% und vorzugsweise zwischen 25-35 Gew.% und einen Anteil der Füllstoffpartikel bezogen auf die Masse der Gießmasse zwischen 40 - 85%, insbesondere zwischen 60 - 80 %, vorzugsweise zwischen 65 - 75% aufweisen.

Das Bindemittel kann wenigstens ein Monomer, vorzugsweise Methylmethacrylat, und wenigstens ein darin gelöstes Polymer, vorzugsweise Polymethylmethacrylat umfassen.

Auch kann die Gießmasse einen Vernetzer, insbesondere Trimethylolpropantrimethacrylat, enthalten. Dabei kann der Anteil des Vernetzers mindestens 2 Gew.% bezogen auf den Anteil des Monomers des Bindemittel, vorzugsweise mindestens 5 Gew.%, insbesondere mindestens 10 Gew.%, und bevorzugt zwischen 20-30 Gew.% betragen. Eine Gießmasse mit einen niedrigeren Vernetzergehalt ist z.B. aus DE 38 32 351 A1 bekannt, eine Gießmasse mit einem hohen Vernetzergehalt ist in DE 102004 055 365 A1 beschrieben

Die Füllstoffpartikel sind bevorzugt aus $SiO_2$, $Al_2O_3$, $TiO_2$, $ZrO_2$, $Fe_2O_3$, $ZnO$, $Cr_2O_5$, Kohlenstoff, Metallen oder Metalllegierungen gewählt, oder sind Mischungen davon, wobei die Füllstoffpartikel vorzugsweise eine Partikelgröße von 0,010 bis 8000 $\mu$m, bevorzugt 0,05 bis 3000 $\mu$m, und insbesondere 0,1 bis 1300 $\mu$m aufweisen. Diese anorganische Füllstoffpartikel können eine Korngröße zwischen 0,01 mm und 2 mm aufweisen oder ein Seitenverhältnis von Länge zu Breite von 1,0 bis 1000 (Länge : Breite der Einzelpartikel).

Eine Alternative sieht eine weitestgehend biologische bzw. biobasierte wäameaushärtbare Gießmasse vor, umfassend:

(a) ein oder mehrere mono- und ein oder mehrere polyfunktionelle Acryl- und/oder Methacryl-Biomonomere pflanzlichen oder tierischen Ursprungs

(b) ein oder mehrere Polymere oder Copolymere gewählt aus Polyacrylaten, Polymethacrylaten, Polyolen, Polyestern aus recyceltem Material oder pflanzlichen oder tierischen Ursprungs,

(c) anorganische Füllstoffpartikel natürlichen Ursprungs,

wobei die Bestandteile a) und b) das polymere Bindemittel bilden, und wobei, neben dem Anteil des oder der ätherischen Öle, der Anteil des oder der mono- und polyfunktionellen Acryl- und Methacryl-Biomonomere 10 - 40 Gew.-%, der Anteil des oder der Polymere oder Copolymere 1 - 16 Gew.-% und der Anteil der anorganischen Füllstoffpartikel 44 - 89 Gew.-% beträgt.

Diese erfindungsgemäße Gießmasse zeichnet sich neben dem oder den ätherischen Ölen dadurch aus, dass sie zu einem Großteil, wenn nicht sogar zu 100%, aus biologischen bzw. natürlichen Materialien insbesondere in Bezug auf die verwendeten, sich vernetzenden Stoffe, besteht. So sind erfindungsgemäß die verwendeten mono- und polyfunktionellen Acryl- und Methacryl- Bio-Monomere ausschließlich pflanzlichen oder tierischen Ursprungs. Hier kommen also keine petrochemisch gewonnenen Polymere zum Einsatz. Ein Bio-Monomer ist ein Monomer eines Bio-Polymers. Der Begriff "polyfunktionell" umfasst bi-, tri- und höherfunktionelle Bio-Monomere.

Die verwendeten Polymere oder Copolymere sind vorzugsweise ebenfalls rein pflanzlichen oder tierischen Ursprungs, d.h., dass auch diese Stoffe nicht petrochemischen Ursprungs sind. Hier besteht jedoch alternativ zur Verwendung von Stoffen pflanzlichen/tierischen Ursprungs auch die Möglichkeit, Polymere oder Copolymere aus Recyclingmaterial zu verwenden. Zwar ist dieses Material zumeist petrochemischen Ursprungs, jedoch wird kein Neumaterial verwendet, sondern ein bereits vorhandenes, jedoch recyceltes Material wiederverwendet, was aus Umweltgesichtspunkten ebenfalls vorteilhaft ist. Da die Bio-Monomere neben den verwendeten anorganischen Füllstoffen, die ebenfalls natürlichen Ursprungs sind, den größeren Anteil auf der Polymerseite ausmachen, ist innerhalb der erfindungsgemäßen Gießmasse selbst bei Verwendung von Recyclingmaterial eine Großteil bisheriger verwendeter Stoffe auf petrochemischer Basis durch Bio-Material in Form der Bio-Monomere ersetzt. Bevorzugt natürlich werden auch Polymere bzw. Copolymere rein pflanzlichen oder tierischen Ursprungs verwendet, so dass sich in diesem Falle eine zu 100% auf natürlichen Materialien bestehende Gießmasse ergibt, da wie beschrieben auch die Füllstoffe rein natürlichen Ursprungs sind. Damit handelt es sich bei dem aus der erfindungsgemäßen Gießmasse hergestellten Formkörper folglich um einen Bio-Formkörper, der überwiegend oder vorzugsweise vollständig aus biologischen, also natürlichen Materialien besteht. Die Herstellung des Bio-Verbundwerkstoffe aus den Füllstoffpartikeln und den sich vernetzenden Materialien, die aus erneuerbaren Quellen hergestellt werden, reduziert den Verbrauch der petrochemisch hergestellten Materialien und damit den Erdölverbrauch und wirkt sich positiv auf die Umwelt aus.

Da ätherische Öl-Extrakte aus aromatischen Pflanzen sind und ca. 20 - 60 Komponenten in ganz unterschiedlichen Konzentrationen enthalten, ist folglich auch der Ölanteil biobasiert und fügt sich daher bestens in diesen biologischen Ansatz dieser Gießmasse ein.

Trotz Verwendung von überwiegend oder ausschließlich natürlichen Materialien zur Herstellung der Gießmasse einschließlich des Anteils an dem oder den ätherischen Ölen bzw. des Formkörpers, also z.B. einer Küchenspüle, hat sich überraschend herausgestellt, dass der Formkörper sehr gute, teilweise sogar noch bessere mechanische Eigenschaften, insbesondere hinsichtlich der Schlagzähigkeit oder der Kratzfestigkeit im Vergleich mit einer bekannten, aus petrochemisch gewonnenen vernetzenden Materialien hergestellten Gießmasse bzw. einem derartigen Formkörper zeigt. Zu diesen hinzu kommen noch die hervorragenden hygienischen Eigenschaften resultierend aus den antibakteriellen oder antimikrobiellen Eigenschaften der Gießmasse und damit des Formkörpers. Eine solche Gießmasse, jedoch ohne Zusatz an ätherischem Öl(en), ist aus DE 10 2019 125 777.8.

Eine dritte Variante einer Gießmasse umfasst, neben dem Anteil an ätherischem Öl oder Ölen:

(a) ein oder mehrere mono- und ein oder mehrere polyfunktionelle Acryl- und/oder Methacryl-Biomonomere pflanzlichen oder tierischen Ursprungs

(b) ein oder mehrere Polymere oder Copolymere gewählt aus Polyacrylaten, Polymethacrylaten, Polyolen, Polyestern aus recyceltem Material oder pflanzlichen oder tierischen Ursprungs,

(c) anorganische Füllstoffpartikel natürlichen Ursprungs,

wobei die Bestandteile a) und b) das polymere Bindemittel bilden, und wobei der Anteil des oder der mono- und polyfunktionellen Acryl- und Methacryl-Biomonomere 10 - 40 Gew.-%, der Anteil des oder der Polymere oder Copolymere 1 - 16 Gew.-% und der Anteil der anorganischen Füllstoffpartikel 44 - 89 Gew.-% beträgt.

Dieser dritte erfindungsgemäße Gießmassenansatz zeichnet sich dadurch aus, dass sie zu einem Großteil aus biologischen bzw. natürlichen Materialien insbesondere in Bezug auf die verwendeten, sich vernetzenden Stoffe besteht. Erfindungsgemäß wird eine Mischung aus verschiedenen monofunktionellen Monomeren verwendet. Erfindungsgemäß besteht die verwendete Mischung der monofunktionellen Acryl- und Methacryl-Monomere zu einem Teil aus recyceltem Material und zu einem Teil aus Monomeren pflanzlichen oder tierischen Ursprungs, wobei mindestens ein Monomer aus recyceltem und mindestens ein Monomer biobasiert ist, also pflanzlichen oder tierischen Ursprungs ist. Hier kommen also kaum petrochemisch gewonnene Polymere zum Einsatz, abgesehen von dem recycelten Anteil, der aber auch gegebenenfalls aus recyceltem biobasiertem Material besteht. In jedem Fall wird im Umfang des recycelten monofunktionellen Monomeranteils kein petrochemisch basiertes Neumaterial verwendet. Als polyfunktionelle Monomere werden ausschließlich Monomere pflanzlichen oder tierischen Ursprungs verwendet. Soweit Monomere, seien es monofunktionelle oder polyfunktionelle Monomere, pflanzlichen oder tierischen Ursprungs verwendet werden, können diese als "Bio-Monomere" bezeichnet, werden, wobei ein Bio-Monomer ein Monomer eines Bio-Polymers ist. Der Begriff "polyfunktionell" umfasst bi-, tri- und höherfunktionelle Bio-Monomere.

Die verwendeten Polymere oder Copolymere sind vorzugsweise ebenfalls rein pflanzlichen oder tierischen Ursprungs, d.h., dass auch diese Stoffe nicht petrochemischen Ursprungs sind. Hier besteht jedoch alternativ zur Verwendung von Stoffen pflanzlichen/tierischen Ursprungs auch die Möglichkeit, Polymere oder Copolymere aus Recyclingmaterial zu verwenden. Zwar ist dieses Material zumeist petrochemischen Ursprungs, jedoch wird kein Neumaterial verwendet, sondern ein bereits vorhandenes, jedoch recyceltes Material wiederverwendet, was aus Umweltgesichtspunkten ebenfalls vorteilhaft ist. Durch den Einsatz von BioMonomeren und Reyclingmaterial werden innerhalb der erfindungsgemäßen Gießmasse selbst im Bindemittel bisher verwendete Stoffe auf petrochemischer Basis durch nachhaltige Materialien vollständig ersetzt. Bevorzugt natürlich werden auch Polymere bzw. Copolymere rein pflanzlichen oder tierischen Ursprungs verwendet, so dass sich in diesem Falle eine, abgesehen von dem monofunktionellen recycelten Monomeranteil, vollständig auf natürlichen Materialien bestehende Gießmasse ergibt, da wie beschrieben auch die Füllstoffe rein natürlichen Ursprungs sind. Damit handelt es sich bei dem aus der erfindungsgemäßen Gießmasse hergestellten Formkörper folglich um einen Bio-Formkörper, der überwiegend aus biologischen, also natürlichen Materialien besteht.

Die Herstellung des Bio-Verbundwerkstoffs oder Bio-Kompositwerkstoffs aus den Füllstoffpartikeln und den sich vernetzenden Materialien, die aus erneuerbaren Quellen hergestellt werden, reduziert den Verbrauch der petrochemisch hergestellten Materialien und damit den Erdölverbrauch und wirkt sich positiv auf die Umwelt aus.

Auch hier tragen die verwendeten ätherischen Öle als biologische Mittel zur biologischen Gesamtbilanz der Gießmasse bei.

Auch bei diesem Gießmassenansatz hat sich überraschend herausgestellt, dass der Formkörper sehr gute, teilweise sogar noch bessere mechanische Eigenschaften, insbesondere hinsichtlich der Schlagzähigkeit oder der Kratzfestigkeit im Vergleich mit einer bekannten, aus petrochemisch gewonnenen vernetzenden Materialien hergestellten Gießmasse bzw. einem derartigen Formkörper zeigt. Hinzu kommen auch hier die hervorragenden antibakteriellen bzw,. antimikrobiellen Eigenschaften über die enthaltenen ätherischen Öle.

Für beide oben dargestellten, biobasierten Gießmassen gilt, das das Gewichtverhältnis von monofunktionellen Biomonomeren zu polyfunktionellen Biomonomeren 2 : 1 bis 80 : 1, vorzugsweise 4 : 1 bis 70 : 1, insbesondere 5 : 1 bis 60 : 1 betragen sollte.

Das oder die monofunktionellen Biomonomere sind bevorzugt gewählt aus biobasierten Acrylaten oder wobei das oder die monofunktionellen Monomere gewählt sind aus recycelten Acrylaten und Acrylaten pflanzlichen oder tierischen Ursprungs, nämlich n-Butylacrylat, Methylacrylat, Ethylacrylat, tert-Butylacrylat, Isobutylacrylat, Isodecylacrylat, Dihydrodicyclopentadienylacrylat, Ethyldiglykolacrylat, Heptadecylacrylat, 4-Hydroxybutylacrylat, 2-Hydroxyethylacrylat, Hydroxyethylcaprolaktonacrylat, Polycaprolaktonacrylat, Hydroxypropylacrylat, Laurylacrylat, Stearylacrylat, Tertiobutylacrylat, 2(2-Ethoxy) Ethylacrylat, Tetrahydrofurfurylacrylat, 2-Phenoxyethylacrylat, ethoxyliertes 4-Phenylacrylat, Trimethylcyclohexylacrylat, Octyldecylacrylat, Tridecylacrylat, ethoxyliertes 4-Nonylphenolacrylat, Isobornylacrylat, zyklisches Trimethylolpropanformalacrylat, ethoxyliertes 4-Laurylacrylat, Polyesteracrylat, Stearylacrylat hyperverzweigtes Polyesteracrylat, Melaminacrylat, Silikonacrylat, Epoxyacrylat, und aus biobasierten Methacrylaten oder aus recycelten Methacrylaten und Methacrylaten pflanzlichen oder tierischen Ursprungs, nämlich Methylmethacrylat, Ethylmethacrylat, n-Butylmethacrylat, Isobutylmethacrylat, tert-Butylmethacrylat, Behenylmethacrylat, Ehenylpolyethylenglyklolmethacrylat, Cyclohexylmethacrylat, Isodecylmethacrylat, 2-Ethylhexylmethacrylat, Laurylmethacrylat, Stearylmethacrylat, Stearylpolyethylenglyklolmethacrylat, Isotridecylmethacrylat, Ureidomethacrylat, Tetrahydrofurfurylmethacrylat, Phenoxyethylmethacrylat, 3,3,5-Trimethylzyclohexanolmethacrylat, Isobornylmethacrylat, Methoxypolyethylenglyklolmethacrylat, Glycedylmethacrylat, Hexylethylmethacrylat, Glycerolformalmethacrylat, Laurytetradecylmethacrylat, C17,4-Methacrylat.

Das oder die polyfunktionellen Biomonomere sind bevorzugt gewählt aus Acrylaten pflanzlichen oder tierischen Ursprungs, nämlich 1,6-Hexandioldiacrylat, Polyethylenglykoldiacrylat, Tetraethylenglykoldiacrylat, Tripropylenglykoldiacrylat, Polybutadiendiacrylat, 3 Methyl-1,5-Pentandioldiacrylat, ethoxyliertes Bisphenol A-Diacrylat, Dipropylenglykoldiacrylat, ethoxyliertes Hexandioldiacrylat, 1,10 Dekandioldiacrylat, Esterdioldiacrylat, alkoxyliertes Diacrylat, Trizyclodecandimethanoldiacrylat, propoxyliertes Neopentylglykoldiacrylat, Pentaerythritoltetraacrylat, Trimethylolpropantriacrylat, Di-Trimethylolpropantetraacrylat, Tris (2-Hydroxyethyl)isocyanurattriacrylat, DiPentaerythritpentaacrylat, ethoxyliertes Trimethylolpropantriacrylat, Pentaerythrittriacrylat, propoxyliertes Trimethylolpropantriacrylat, ethoxyliertes Pentaerythrittetraacrylat, propoxyliertes Glyceryltriacrylat, aliphatisches Urethandiacrylat, aliphatisches Urethanhexaacrylat, aliphatisches Urethantriacrylat, aromatisches Urethandiacrylat, aromatisches Urethantriacrylat, aromatisches Urethanhexaacrylat, Polyesterhexaacrylat, epoxydierte Sojaöldiacrylat und aus den biobasierten polyfunktionellen Methacrylaten, nämlich Triethylenglykoldimethacrylat, Ethylenglykoldimethacrylat, Polyethylenglykoldimethacrylat, 1,4-Butandioldimethacrylat, Diethylenglykoldimethacrylat, 1,6 Hexandioldimethacrylat, 1,10-Dekandioldimethacrylat, 1,3-Butylenglykoldimethacrylat, ethoxyliertes Bisphenol A-Dimethacrylat, Trizyclodecandimethanoldimethacrylat, Trimethylolpropantrimethacrylat.

Das Gewichtsverhältnis von mono- und polyfunktionellen Acrylaten und Methacrylaten zu dem oder den Polymeren oder Copolymeren sollte 90:10 bis 60:40, vorzugsweise 85:15 bis 70:30 betragen.

Die Füllstoffpartikel der beiden biobasierten Ansätze sind bevorzugt gewählt aus $SiO_2$, $Al_2O_3$, $TiO_2$, $ZrO_2$, $Fe_2O_3$, ZnO, $Cr_2O_5$, Kohlenstoff, Metallen oder Metalllegierungen, oder Mischungen davon, wobei die Füllstoffpartikel vorzugsweise eine Partikelgröße von 0,010 bis 8000 $\mu$m, bevorzugt 0,05 bis 3000 $\mu$m, und insbesondere 0,1 bis 1300 $\mu$m aufweisen. Die anorganische Füllstoffpartikel können eine Korngröße zwischen 0,01 mm und 2 mm aufweisen oder ein Seitenverhältnis von Länge zu Breite von 1,0 bis 1000 (Länge : Breite der Einzelpartikel) aufweisen.

Die erfindungsgemäße Gießmasse sollte grundsätzlich eine Viskosität aufweisen, die das Einspritzen in eine Form erlaubt.

Neben der erfindungsgemäßen Gießmasse betrifft die Erfindung ferner einen Formkörper, hergestellt unter Verwendung einer wärmeaushärtbaren Gießmasse. Je nach verwendeter Gießmasse hinsichtlich der Massekomponenten außer dem oder den ätherischen Ölen kann eine mehr oder weniger stark biobasierter Formkörper hergestellt werden. Wird eine biobasierte Gießmasse verwendet, kann sogar ein zu 100% aus natürlichen, biologischen Stoffen bestehender Formkörper, folglich ein Bio-Kompositkörper, also z.B. eine Bio-Komposit-Küchenspüle o.dgl. hergestellt werden.

Dabei können unterschiedliche Formkörpertypen hergestellt werden. So kann es sich bei dem Formkörper um eine Küchenspüle, eine Duschwanne, ein Waschtisch, eine Badewanne, eine Arbeitsplatte oder ein Boden-, Wand- oder Deckenpaneel handeln, wobei diese Aufzählung nicht abschließend ist.

Ferner betrifft die Erfindung ein Verfahren zur Herstellung eines Formkörpers der vorstehend beschriebenen Art, bei dem eine Gießmasse der ebenfalls vorstehend beschriebenen Art verwendet wird, die in eine Form gegeben wird, in der sie bei gegenüber Raumtemperatur erhöhter Temperatur polymerisiert, wonach der polymerisierte Formkörper der Form entnommen wird und abkühlt.

Dabei sollte die Temperatur während der Polymerisation zwischen 60 - 140°C, vorzugsweise zwischen 75 - 130°C und insbesondere 80 -110°C betragen.

Ferner sollte die Haltezeit, während der die Gießmasse zur Polymerisation in der Form bleibt, zwischen 15 - 50 min, vorzugsweise 20 - 45 min und insbesondere 25 - 35 min betragen.

In der vorliegenden Erfindung weisen die Küchenspülen oder Sanitärartikel im Material der Gießmasse einen Gehalt an ätherischen Ölen in einer Konzentration von 0,05 Gew.-% oder höher, bis maximal 5 Gew.% auf. Ätherische Öle sind Extrakte aus aromatischen Pflanzen. Ätherische Öle enthalten ca. 20 - 60 Komponenten in ganz unterschiedlichen Konzentrationen. Die häufigsten Bestandteile sind Terpene, aromatische und aliphatische Komponenten (insbesondere Alkohole, Ester, Ether, Aldehyde, Ketone, Lactone, Phenole und Phenolether (siehe hierzu Bakkali F., Averbeck. S., Averbeck D., et al. (2008) Food Chem. Toxicol. 46:446)). Diese Substanzen können eine starke chemische oder physikalische Bindung mit den Komponenten der Spüle eingehen (z.B. Quarzsand, der an der Oberfläche viele Hydroxylfunktionen hat), wodurch die wirksamen antimikrobiellen Eigenschaften der ätherischen Öle zu entsprechenden Eigenschaften des aus der erfindungsgemäßen Gießmasse hergestellten Formkörpers führen und zwar bereits bei niedrigen Konzentrationen.

Da die Moleküle der ätherischen Öle gleichmäßig in die Gießmasse eingearbeitet werden und somit über das Gesamtvolumen der Küchenspüle und des Sanitärartikels verteilt sind, bedeutet dies, dass die Rückseite der Küchenspüle oder des Sanitärartikels ebenfalls eine antimikrobielle Oberfläche aufweist. Ferner wird eine abrasive Behandlung, wie sie in der Küche oder im Sanitärraum häufig vorkommt, daher nicht die antimikrobielle Wirkung reduzieren.

Nachfolgend werden einige Beispiele für die Wirksamkeit der erfindungsgemäßen Gießmasse und damit der erfindungsgemäßen Formkörper auf die Reduktion von verschiedenen Bakterien gegeben.

Beispiel 1:

Zusammensetzung einer rot eingefärbten Küchenspüle ohne und mit antibakteriellen Eigenschaften (Angaben in Gew.%):

| | Spüle für Kontrollprobe ohne Zugabe ätherischen Öls | Erfindungsgemäße Spüle |
|---|---|---|
| PMMA Copolymer (Lucite International) | 4,8 | 4,8 |
| Methylmethacrylat (Lucite International) | 19,2 | 19,1 |
| Füllstoff Quarzsand 0,05 - 0,3 mm (Dorfner GmbH) | 68,5 | 68,2 |
| Trimethylolpropan Trimethacrylate. (Arkema) | 5,4 | 5,3 |
| Zink Stearat (Magnesia GMBH) | 0,3 | 0,3 |
| Peroxide (Rergan GmbH) | 0,4 | 0,4 |
| Pigment Rot (Lanxess AG) | 1,3 | 1,3 |
| Antiabsetzmittel, BYK 410 (BYK-Chemie GmbH) | 0,1 | 0,1 |
| Ätherisches Öl (Life Materials Technology LTD) | - | 0,5 |

Die Mischung für die Herstellung der Polymermatrix wird durch Lösen des Polymers in der Methylmethacrylat hergestellt. Für die erfindungsgemäße Spüle mit zumindest antibakteriellen Eigenschaften wurde zusätzlich das ätherische Pfefferminzöl (Life CN/AB-20-2U mit dem Vernetzer unter Rühren 30 min lang eingebracht. Die jeweilige finale Gießmasse wird zur Herstellung von Küchenspülen mit einem Spülbecken mit einem Boden und umgebenden Seitenwänden in eine Form gegeben und die Polymerisation erfolgt thermisch: Das Material wird ausgehend von einer Umgebungstemperatur von 20 - 30 °C mittels einer Heizrampe bis auf 90 - 120 °C in einer Form, wie in Patent DE 38 32 351 beschrieben, auspolymerisiert, wobei die durchschnittliche Zeit je nach Art der Gießmasse und der Ausheizzeit der Form zwischen 20 und 40 Minuten beträgt.

**Beispiel 2:**

Zusammensetzung einer schwarz eingefärbten Küchenspüle ohne und mit antibakteriellen Eigenschaften (Angaben in Gew.%):

| | Spüle für Kontrollprobe ohne Zugabe ätherischen Öls | Erfindungsgemäße Spüle II | Erfindungsgemäße Spüle III |
|---|---|---|---|
| PMMA Copolymer (Lucite International) | 4,7 | 4,7 | 4,7 |
| Methylmethacrylat (Lucite International) | 19,5 | 19,25 | 19,2 |
| Füllstoff Quarzsand 0,05 - 0,3 mm (Dorfner GmbH) | 69,4 | 69,0 | 68,8 |
| Trimethylolpropan Trimethacrylate. (Arkema) | 4,7 | 4,6 | 4,6 |
| Zink Stearat (Magnesia GmbH) | 0,4 | 0,4 | 0,4 |
| Peroxide Pergan GmbH | 0,4 | 0,4 | 0,4 |
| Pigment Schwarz (Orion Engineered Carbon) | 0,7 | 0,7 | 0,7 |
| Antiabsetzmittel, BYK D410 (BYK-Chemie GmbH) | 0,2 | 0,2 | 0,2 |
| Ätherische Öl (Life Materials Technology Ltd) | - | 0,75 | 1,0 |

Der Herstellungsprozess ist für das verwendete Material ähnlich dem in Beispiel 1 beschriebenen mit dem Unterschied, dass ein anderes ätherisches Öl als antibakterielles bzw. antimikrobielles Additiv eingesetzt wurde. Für das Beispiel 2 wurde Pfefferminzöl (Life CN/AB-50-2U, Life Materials Technology LTD) verwendet.

Bestimmung der antibakteriellen Eigenschaften der Oberfläche der Küchenspüle aus Beispielen 1 - 2.

Die Bestimmung wurde nach ISO 22196:2011 durchgeführt.

6 Proben der Abmessung 5 x 5 cm wurden aus dem Boden jeder Testspüle geschnitten, so dass von den drei Spülen insgesamt 30 Proben bzw. Prüfkörper genommen wurden. Die Prüfkörper wurden auf einer Fläche von 4 x 4 cm mit dem Prüfkeim auf der Prüfseite (glatte Seite = Sicht- oder Arbeitsseite) beimpft. Vor dem Test wurden die Bakterien aus der Stammkultur auf das Kulturmedium übertragen und 16 h bei $(35 \pm 1)$ ° C inkubiert. Aus dieser Kultur wurden unter Verwendung einer sterilen Inokulationsschleife Bakterien auf frisches Kulturmedium übertragen und weitere 16 Stunden bei $(35 \pm 1)$ ° C inkubiert.

Vorinkubierte Bakterien wurden in eine neutralisierende Lösung von 1/500 NB überführt. Die Testbakterien wurden gleichmäßig verteilt und die Anzahl der Bakterien wurde unter Verwendung einer Petroff-Hausser-Zählkammer mittels direkter mikroskopischer Beobachtung (SWIFT SW380T Optical Microscope) gezählt. Nach dem Anreichern auf die jeweiligen Konzentrationen wurden diese Lösungen als Testinokulum verwendet. Jede Testprobe wurde in die separate sterile Petrischale gegeben. Unter Verwendung einer 0,4 ml Pipette wurde das Testinokulum auf die Testoberflächen übertragen. Unmittelbar nach der Inokulation mit Neutralisationslösung wurden die Bakterien von einigen der Testproben abgespült und die Keimzahl $(U_o)$ bestimmt. Das Testinokulum wurde mit einem Polyethylenfilm mit einer Dicke von $0,07 \pm 0,01$ mm bedeckt, um die Feuchtigkeitsaufnahme durch Bakterien zu verhindern. Die Petrischalen, die die beimpften Testproben enthielten, wurden 24 Stunden bei einer Temperatur von $(35 \pm)$ ° C und einer relativen Luftfeuchtigkeit von 90% inkubiert. Danach wurden sie ebenfalls mit Neutralisationslösung gespült und die Keimzahl der Testproben bestimmt ($U_t$ und $A_t$).

Der Test wurde als Vierfachbestimmung durchgeführt. Die Testproben wurden vor dem Test mit 70 % Ethanol gereinigt.

Prüfung der Bakterien: *Staphylococcus aureus* (DSM 799) *Escherichia Coli* (DSM 1576).
Testbedingungen: T = $36 \pm 1$ °C; 24 h; Luftfeuchtigkeit mehr als 90%.
Neutralisierende Lösung: BD Difco™ Neutralisierende Brühe
Kulturmedium: Plattenzahl-Agar

Typische Berechnung für die schwarz eingefärbte Küchenspüle aus Beispiel 2:

| Geprüfter Mikroorganismus | Konzentration von Bakterien (KBE/ml) | Anfängliche Inokulum-Konzentration (KBE/ Probenstück) | Die Anzahl der Bakterien, die von der Kontrollprobe nach 0 Stunden Kontaktzeit zurückgewonnen wurden (KBE/Probenstück) | Die Anzahl der Bakterien, die von der Kontrollprobe nach 24 Stunden Kontaktzeit zurückgewonnen wurden (KBE/Probenstück) | Die Anzahl der Bakterien, die von dem Prüfmuster nach 24 Stunden Kontaktzeit zurückgewonnen wurden (KBE/Probenstück) | Antibakterielle Aktivität (R) | % Reduk-tion |
|---|---|---|---|---|---|---|---|
| *Staphylococcus aureus* | 250,000 | 100,000 (5.0 log) | 100,000 (5.0 log) | 520,000 (5.7 log) | 65,000 (4,8 log) | 0.9 | 87.50 |
| *Escherichia Coli* | 370,000 | 150,000 (5.2 log) | 130,000 (5.1 log) | 4,100,000 (6.6 log) | 90 (2.0 log) | 4.6 | 99.99 |

Berechnung der antibakteriellen Aktivität R:

$$R = (U_t - U_0) - (A_t - U_0)$$

wobei gilt:

R - antibakterielle Aktivität
Uo - Mittelwert des Logarithmus der Anzahl lebensfähiger Bakterien in Zellen / cm2, die unmittelbar nach der Inkubation aus unbehandelten Proben gewonnen wurden Ut - Mittelwert des Logarithmus der Anzahl lebensfähiger Bakterien in Zellen / cm2 aus unbehandelten Proben unmittelbar nach 24 h
At - Mittelwert des Logarithmus der Anzahl lebensfähiger Bakterien in Zellen / cm2, die aus behandelten Proben unmittelbar nach 24 h gewonnen wurden

Berechnung des %-Wertes der Reduktion

$$\% \, Reduktion = \frac{A - B}{A} \times 100$$

wobei gilt:

A = Die Anzahl der Bakterien, die nach 24 Stunden Kontaktzeit von der Kontrolle zurückgewonnen wurden (KBE/Probenstück)
B = Die Anzahl der Bakterien, die aus der getesteten Probe nach 24 Stunden Kontaktzeit zurückgewonnen wurden (KBE/Probenstück)

Die ermittelten antibakteriellen Eigenschaften der Küchenspülen des Beispiels 1 - 2:

| Muster | Gram-positive Bakterien | % Reduktion | Gram-negative Bakterien | % Reduktion |
|---|---|---|---|---|
| Rot - LIFE CN/AB-20-2U | ++ | 98.3 | + | 83.3 |
| Rot (Kontrolle) | - | 0 | - | 0 |
| Schwarz - LIFE CN/AB-50-2U (0,75 Gew.%) | + | 87.5 | +++ | > 99.99 |
| Schwarz (Kontrolle) | - | 0 | - | 0 |
| Schwarz - LIFE CN/AB-50-2U (1,0 Gew.%) | + | 86,3 | +++ | > 99,99 |
| Schwarz (Kontrolle) | - | 0 | - | 0 |

Es zeigt sich, dass die erfindungsgemäßen Formkörper hervorragende Eigenschaften in Bezug auf eine Reduzierung von Bakterien innerhalb kurzer Zeit zeigen.

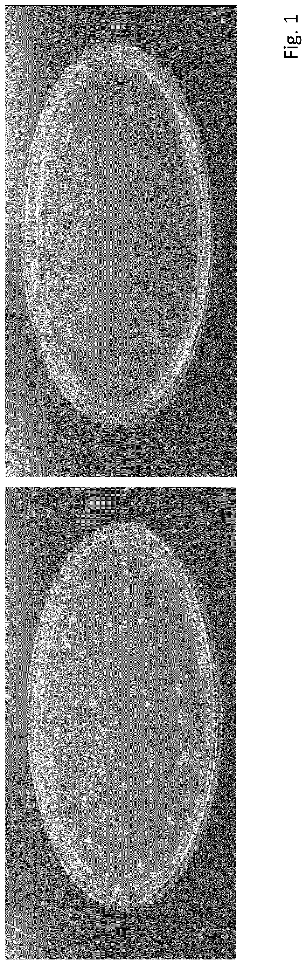

FIG1. zeigt die Escherichia Coli-Kolonie, nach 24-stündigem Test der schwarzen Spülen aus dem Beispiel 2 und der Kontrollprobe. E-coli-Kolonien wurden mit der Neutralisationslösung von der erfindungsgemäßen Probe und der Kontrollprobe abgespült und in den Petrischalen gesammelt. Auf der linken Seite sieht man eine Petrischale mit der E-coli-Bakterienkolonie nach dem Test der Kontrollprobe. Auf der rechten Seite sieht man eine signifikante Reduktion der Bakterienkolonie nach dem Test der erfindungsgemäßen Probe. Es zeigen sich nur sehr wenige vereinzelte Kolonien, während die Kontrollprobe eine hohe Besiedlung zeigt.

Die Verbesserung der antimikrobiellen Eigenschaften der vorliegenden Erfindung wirkt sich nicht auf die Textur der Oberfläche des Küchenspülbeckens oder der Sanitärgegenstände aus.

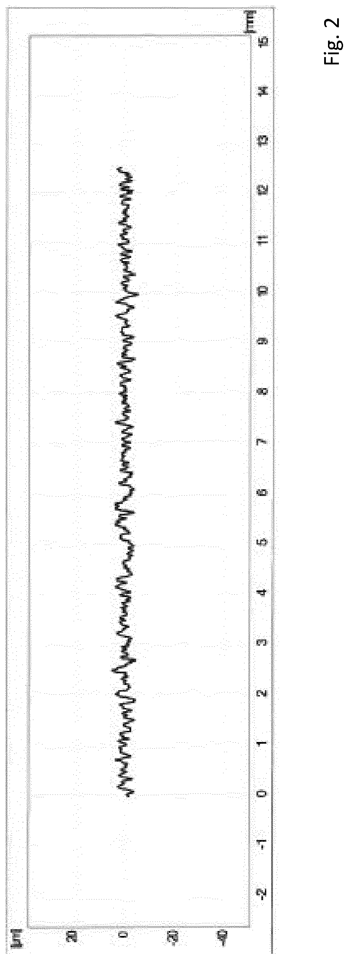

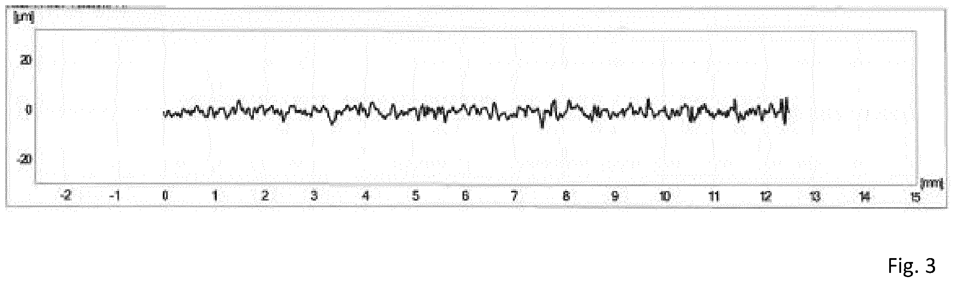

Die Figuren 2 und 3 zeigen die Rauheitsmessung mit einem Mitutoyo SJ-500 P Messgerät einer Kontrollspüle (Figur 2) und einer erfindungsgemäßen Spüle (Figur 3). Aufgetragen ist längs der Abszisse der Messweg in mm, und längs der Ordinate die Rauhigkeit in $\mu$m.

Die Oberflächen der Kontrollspüle und der erfindungsgemäßen Spüle mit der LIFE CN/AB-50-2U, (1 Gew. %) haben das Rauheitsmaximum (Rzmax) im Bereich von 5 zu 10 $\mu$m. Die maximale Rauhigkeit der Kontrollspüle beträgt Rzmax(Kontrol)l = 7,4 $\mu$m, die der erfindungsgemäßen Spüle beträgt Rzmax(antibak) = 9,3 $\mu$m. Darüber hinaus hat der Zusatz der ätherischen Öle keinen Einfluss auf die mechanische und thermische Leistung des hergestellten Produkts.

**Patentansprüche**

1. Wärmeaushärtbare Gießmasse, mit einem polymeren Bindemittel und darin eingebrachten Füllstoffpartikeln, **dadurch gekennzeichnet, dass** die Gießmasse wenigstens ein ätherisches Öl enthält.

2. Wärmeaushärtbare Gießmasse nach Anspruch 1, **dadurch gekennzeichnet, dass** die Gießmasse eine Mischung mehrerer ätherischer Öle enthält.

3. Wärmeaushärtbare Gießmasse nach Anspruch 1 oder 2, **dadurch gekennzeichnet, dass** das ätherische Öl oder die mehreren die Mischung bildenden ätherischen Öle gewählt sind aus Zimtöl, Nelkenöl, Pimentöl, Thymianöl, Oreganoöl, Rosmarinöl, Citronellaöl, Geraniumöl, Zitronengrasöl, Eukalyptusöl oder Pfefferminzöl.

4. Wärmeaushärtbare Gießmasse nach einem der vorangehenden Ansprüche, **dadurch gekennzeichnet, dass** der Anteil des oder der ätherischen Öle im Bereich von 0,05 - 5 Gew.%, vorzugsweise 0,1 - 4 Gew.%, bevorzugt 0,3 - 3 Gew.% liegt.

5. Wärmeaushärtbare Gießmasse nach einem der vorangehenden Ansprüche, **dadurch gekennzeichnet, dass** der Anteil des polymeren Bindemittels bezogen auf die Masse der Gießmasse zwischen 15 - 60 Gew.%, insbesondere zwischen 20 - 40 Gew.% und vorzugsweise zwischen 25-35 Gew.% und der Anteil der Füllstoffpartikel bezogen auf die Masse der Gießmasse zwischen 40 - 85%, insbesondere zwischen 60 - 80 %, vorzugsweise zwischen 65 - 75% beträgt.

6. Wärmeaushärtbare Gießmasse nach einem der vorangehenden Ansprüche, **dadurch gekennzeichnet, dass** das Bindemittel (6) wenigstens ein Monomer, vorzugsweise Methylmethacrylat, und wenigstens ein darin gelöstes Polymer, vorzugsweise Polymethylmethacrylat umfasst.

7. Wärmeaushärtbare Gießmasse nach einem der vorangehenden Ansprüche, **dadurch gekennzeichnet, dass** sie einen Vernetzer, insbesondere Trimethylolpropantrimethacrylat, umfasst.

8. Wärmeaushärtbare Gießmasse nach Anspruch 6 und 7, **dadurch gekennzeichnet, dass** der Anteil des Vernetzers mindestens 2 Gew.% bezogen auf den Anteil des Monomers des Bindemittel, vorzugsweise mindestens 5 Gew.%, insbesondere mindestens 10 Gew.%, und bevorzugt zwischen 20-30 Gew.% beträgt.

9. Wärmeaushärtbare Gießmasse nach einem der vorangehenden Ansprüche, **dadurch gekennzeichnet, dass** die Füllstoffpartikel gewählt sind aus SiO2, Al2O3, TiO2, ZrO2, Fe2O3, ZnO, Cr2O5, Kohlenstoff, Metallen oder Metalllegierungen, oder Mischungen davon, wobei die Füllstoffpartikel vorzugsweise eine Partikelgröße von 0,010 bis 8000 $\mu$m, bevorzugt 0,05 bis 3000 $\mu$m, und insbesondere 0,1 bis 1300 $\mu$m aufweisen.

10. Wärmeaushärtbare Gießmasse nach einem der Ansprüche 1 bis 4, umfassend:

    (a) ein oder mehrere mono- und ein oder mehrere polyfunktionelle Acryl- und/oder Methacryl-Biomonomere pflanzlichen oder tierischen Ursprungs
    (b) ein oder mehrere Polymere oder Copolymere gewählt aus Polyacrylaten, Polymethacrylaten, Polyolen, Polyestern aus recyceltem Material oder pflanzlichen oder tierischen Ursprungs,
    (c) anorganische Füllstoffpartikel natürlichen Ursprungs,

    wobei die Bestandteile a) und b) das polymere Bindemittel bilden, und
    wobei der Anteil des oder der mono- und polyfunktionellen Acryl- und Methacryl-Biomonomere 10 - 40 Gew.-%, der Anteil des oder der Polymere oder Copolymere 1 - 16 Gew.-% und der Anteil der anorganischen Füllstoffpartikel 44 - 89 Gew.-% beträgt.

11. Wärmeaushärtbare Gießmasse nach einem der Ansprüche 1 bis 3, umfassend:

(a) ein oder mehrere mono- und ein oder mehrere polyfunktionelle Acryl- und/oder Methacryl-Biomonomere pflanzlichen oder tierischen Ursprungs

(b) ein oder mehrere Polymere oder Copolymere gewählt aus Polyacrylaten, Polymethacrylaten, Polyolen, Polyestern aus recyceltem Material oder pflanzlichen oder tierischen Ursprungs,

(c) anorganische Füllstoffpartikel natürlichen Ursprungs,

wobei die Bestandteile a) und b) das polymere Bindemittel bilden, und

wobei der Anteil des oder der mono- und polyfunktionellen Acryl- und Methacryl-Biomonomere 10 - 40 Gew.%, der Anteil des oder der Polymere oder Copolymere 1 - 16 Gew.% und der Anteil der anorganischen Füllstoffpartikel 44 - 89 Gew.% beträgt.

12. Wärmeaushärtbare Gießmasse nach Anspruch 10 oder 11, wobei das Gewichtverhältnis von monofunktionellen Biomonomeren zu polyfunktionellen Biomonomeren 2 : 1 bis 80 : 1, vorzugsweise 4 : 1 bis 70 : 1, insbesondere 5 : 1 bis 60 : 1 beträgt.

13. Wärmeaushärtbare Gießmasse nach einem der Ansprüche 10 bis 12, wobei das oder die monofunktionellen Biomonomere gewählt sind aus biobasierten Acrylaten oder wobei das oder die monofunktionellen Monomere gewählt sind aus recycelten Acrylaten und Acrylaten pflanzlichen oder tierischen Ursprungs, nämlich n-Butylacrylat, Methylacrylat, Ethylacrylat, tert-Butylacrylat, Isobutylacrylat, Isodecylacrylat, Dihydrodicyclopentadienylacrylat, Ethyldiglykolacrylat, Heptadecylacrylat, 4-Hydroxybutylacrylat, 2-Hydroxyethylacrylat, Hydroxyethylcaprolaktonacrylat, Polycaprolaktonacrylat, Hydroxypropylacrylat, Laurylacrylat, Stearylacrylat, Tertiobutylacrylat, 2(2-Ethoxy) Ethylacrylat, Tetrahydrofurfurylacrylat, 2-Phenoxyethylacrylat, ethoxyliertes 4-Phenylacrylat, Trimethylcyclohexylacrylat, Octyldecylacrylat, Tridecylacrylat, ethoxyliertes 4-Nonylphenolacrylat, Isobornylacrylat, zyklisches Trimethylolpropanformalacrylat, ethoxyliertes 4-Laurylacrylat, Polyesteracrylat, Stearylacrylat hyperverzweigtes Polyesteracrylat, Melaminacrylat, Silikonacrylat, Epoxyacrylat, und aus biobasierten Methacrylaten oder aus recycelten Methacrylaten und Methacrylaten pflanzlichen oder tierischen Ursprungs, nämlich Methylmethacrylat, Ethylmethacrylat, n-Butylmethacrylat, Isobutylmethacrylat, tert-Butylmethacrylat, Behenylmethacrylat, Ehenylpolyethylenglykolmethacrylat, Cyclohexylmethacrylat, Isodecylmethacrylat, 2-Ethylhexylmethacrylat, Laurylmethacrylat, Stearylmethacrylat, Stearylpolyethylenglykolmethacrylat, Isotridecylmethacrylat, Ureidomethacrylat, Tetrahydrofurfurylmethacrylat, Phenoxyethylmethacrylat, 3,3,5-Trimethylzyclohexanolmethacrylat, Isobornylmethacrylat, Methoxypolyethylenglykolmethacrylat, Glycedylmethacrylat, Hexylethylmethacrylat, Glycerolformalmethacrylat, Lauryltetradecylmethacrylat, C17,4-Methacrylat.

14. Wärmeaushärtbare Gießmasse nach einem der Ansprüche 10 bis 13, wobei das oder die polyfunktionellen Biomonomere gewählt sind aus Acrylaten pflanzlichen oder tierischen Ursprungs, nämlich 1,6-Hexandioldiacrylat, Polyethylenglykoldiacrylat, Tetraethylenglykoldiacrylat, Tripropylenglykoldiacrylat, Polybutadiendiacrylat, 3 Methyl-1,5-Pentandioldiacrylat, ethoxyliertes Bisphenol A-Diacrylat, Dipropylenglykoldiacrylat, ethoxyliertes Hexandioldiacrylat, 1,10 Dekandioldiacrylat, Esterdioldiacrylat, alkoxyliertes Diacrylat, Trizyclodecandimethanoldiacrylat, propoxyliertes Neopentylglykoldiacrylat, Pentaerythritoltetraacrylat, Trimethylolpropantriacrylat, Di-Trimethylolpropantetraacrylat, Tris (2-Hydroxyethyl)isocyanurattriacrylat, DiPentaerythritpentaacrylat, ethoxyliertes Trimethylolpropantriacrylat, Pentaerythrittriacrylat, propoxyliertes Trimethylolpropantriacrylat, ethoxyliertes Pentaerythrittetraacrylat, propoxyliertes Glyceryltriacrylat, aliphatisches Urethandiacrylat, aliphatisches Urethanhexaacrylat, aliphatisches Urethantriacrylat, aromatisches Urethandiacrylat, aromatisches Urethantriacrylat, aromatisches Urethanhexaacrylat, Polyesterhexaacrylat, epoxydierte Sojaöldiacrylat und aus den biobasierten polyfunktionellen Methacrylaten, nämlich Triethylenglykoldimethacrylat, Ethylenglykoldimethacrylat, Polyethylenglykoldimethacrylat, 1,4-Butandioldimethacrylat, Diethylenglykoldimethacrylat, 1,6 Hexandioldimethacrylat, 1,10-Dekandioldimethacrylat, 1,3-Butylenglykoldimethacrylat, ethoxyliertes Bisphenol A-Dimethacrylat, Trizyclodecandimethanoldimethacrylat, Trimethylolpropantrimethacrylat.

15. Wärmeaushärtbare Gießmasse nach einem der Ansprüche 10 bis 14, wobei das Gewichtsverhältnis von mono- und polyfunktionellen Acrylaten und Methacrylaten zu dem oder den Polymeren oder Copolymeren 90:10 bis 60:40, vorzugsweise 85:15 bis 70:30 beträgt.

16. Wärmeaushärtbare Gießmasse nach einem der vorangehenden Ansprüche, **dadurch gekennzeichnet, dass** die Füllstoffpartikel gewählt sind aus SiO2, Al2O3, TiO2, ZrO2, Fe2O3, ZnO, Cr2O5, Kohlenstoff, Metallen oder Metalllegierungen, oder Mischungen davon, wobei die Füllstoffpartikel vorzugsweise eine Partikelgröße von 0,010 bis

8000 $\mu$m, bevorzugt 0,05 bis 3000 $\mu$m, und insbesondere 0,1 bis 1300 $\mu$m aufweisen.

17. Wärmeaushärtbare Gießmasse nach einem der vorangehenden Ansprüche, **dadurch gekennzeichnet, dass** sie eine Viskosität aufweist, die das Einspritzen in eine Form erlaubt.

18. Formkörper, hergestellt unter Verwendung einer wärmeaushärtbaren Gießmasse nach einem der vorangehenden Ansprüche.

19. Formkörper nach Anspruch 18, wobei der Formkörper eine Küchenspüle, eine Duschwanne, ein Waschtisch, eine Badewanne, eine Arbeitsplatte oder ein Boden-, Wand- oder Deckenpaneel ist.

20. Verfahren zur Herstellung eines Formkörpers nach Anspruch 18 oder 19, bei dem eine Gießmasse nach einem der Ansprüche 1 bis 17 verwendet wird, die in eine Form gegeben wird, in der sie bei gegenüber Raumtemperatur erhöhter Temperatur polymerisiert, wonach der polymerisierte Formkörper der Form entnommen wird und abkühlt.

21. Verfahren nach Anspruch 20, wobei die Temperatur während der Polymerisation zwischen 60 - 140°C, vorzugsweise zwischen 75 - 130°C und insbesondere 80 - 110°C beträgt.

22. Verfahren nach Anspruch 20 oder 21, wobei die Haltezeit, während der die Gießmasse zur Polymerisation in der Form bleibt, zwischen 15 - 50 min, vorzugsweise 20 - 45 min und insbesondere 25 - 35 min beträgt.

Fig. 1

Fig. 2

Fig. 3

EP 3 959 980 A1

**EP 3 959 980 A1**

Europäisches
Patentamt
European
Patent Office
Office européen
des brevets

**EUROPÄISCHER RECHERCHENBERICHT**

**Nummer der Anmeldung**

**EP 21 18 9058**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/008146 A1 (ZAPATA RAMIREZ PAULA [CL] ET AL) 10. Januar 2019 (2019-01-10) * Absätze [0018], [0019]; Ansprüche 1-22 * ----- | 1-22 | INV. A01N33/08 A47K3/00 A47K4/00 A47L17/02 |
| X | US 2018/319056 A1 (KUMUK BURAK [TR] ET AL) 8. November 2018 (2018-11-08) | 1-6,18 | C08F265/06 C08K3/34 |
| A | * Ansprüche 1-20 * ----- | 7-17, 19-22 | B29B15/08 B29C39/00 |
| X | CN 107 200 984 A (CANGNAN COUNTY TONGPU TECH GIFT CO LTD) 26. September 2017 (2017-09-26) * Ansprüche 1-4; Beispiele 1-3 * ----- | 1-22 | |
| A | EP 3 431 245 A1 (BLANCO GMBH & CO KG [DE]) 23. Januar 2019 (2019-01-23) * Ansprüche 1-15 * ----- | 1-22 | |
| A | JP 2004 049365 A (MATSUSHITA ELECTRIC IND CO LTD) 19. Februar 2004 (2004-02-19) * Ansprüche 1-9 * ----- | 1-22 | |

**RECHERCHIERTE SACHGEBIETE (IPC)**

A47L
A47K
C08K
A01N
C08F
B29B
B29C

Der vorliegende Recherchenbericht wurde für alle Patentansprüche erstellt

| Recherchenort | Abschlußdatum der Recherche | Prüfer |
|---|---|---|
| **München** | **14. Januar 2022** | **Madalinski, Maciej** |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 18 9058

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2022

| Im Recherchenbericht angeführtes Patentdokument | Datum der Veröffentlichung | Mitglied(er) der Patentfamilie | Datum der Veröffentlichung |
|---|---|---|---|
| US 2019008146 A1 | 10-01-2019 | CL 2015003698 A1 | 17-06-2016 |
| | | CN 108471740 A | 31-08-2018 |
| | | EP 3395170 A1 | 31-10-2018 |
| | | US 2019008146 A1 | 10-01-2019 |
| | | WO 2017106984 A1 | 29-06-2017 |
| US 2018319056 A1 | 08-11-2018 | KEINE | |
| CN 107200984 A | 26-09-2017 | KEINE | |
| EP 3431245 A1 | 23-01-2019 | DE 102017116306 A1 | 24-01-2019 |
| | | EP 3431245 A1 | 23-01-2019 |
| JP 2004049365 A | 19-02-2004 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9749761 E
- US 7381715 B2
- EP 2575452 A1
- DE 3832351 A1
- DE 102004055365 A1
- DE 102019125777
- DE 1020191251777
- DE 3832351

**In der Beschreibung aufgeführte Nicht-Patentliteratur**

- **WANG X. ; DU Y. ; LIU H.** *Carbohydr. Polym,* 2004, vol. 56, 21
- **LI M. ; LIU B. ; BERNIGAUD CH. et al.** *Plos Neglected Tropical Diseases,* 2020, vol. 6, 1
- **TAVARES T.D. ; ANTUNES J.C. ; PADRÄO J. et al.** *Antibiotics,* 2020, vol. 9, 314
- **BAKKALI F. ; AVERBECK. S. ; AVERBECK D. et al.** *Food Chem. Toxicol.,* 2008, vol. 46, 446